# EUROPÄISCHE PATENTSCHRIFT

(11) **EP 2 365 865 B1**
(45) Veröffentlichungstag und Bekanntmachung des Hinweises auf die Patenterteilung: **29.05.2013**
(21) Anmeldenummer: 09764719.2
(22) Anmeldetag: 27.11.2009
(51) Int. Cl.: B01D 53/58

(54) **ENTFERNUNG VON AMMONIAK-STICKSTOFF, AMMONIUM-STICKSTOFF UND HARNSTOFF-STICKSTOFF DURCH OXIDATION MIT HYPOCHLORIT-HALTIGEN LÖSUNGEN AUS ABLUFT IN ANLAGEN ZUR AMMONIAK- UND HARNSTOFFPRODUKTION**
REMOVAL OF AMMONIA NITROGEN, AMMONIUM NITROGEN AND UREA NITROGEN BY OXIDATION WITH HYPOCHLORITE-CONTAINING SOLUTIONS FROM EXHAUST AIR IN PLANTS FOR PRODUCING AMMONIA AND UREA
ÉLIMINATION D'AZOTE AMMONIACAL, DE NITRATE D'AMMONIUM ET DE NITRATE D'URÉE PAR OXYDATION AVEC DES SOLUTIONS CONTENANT DE L'HYPOCHLORITE À PARTIR D'AIR ÉVACUÉ DANS DES INSTALLATIONS DE PRODUCTION D'AMMONIAC ET D'URÉE

(30) Priorität: 12.12.2008 DE 102008061674
(43) Veröffentlichungstag der Anmeldung: 21.09.2011
(73) Patentinhaber: ThyssenKrupp Uhde GmbH, 44141 Dortmund (DE)
(72) Erfinder: GEHRKE, Helmut, 59192 Bergkamen (DE); LIPPMANN, Dennis, 44267 Dortmund (DE)
(74) Vertreter: Fleuchaus, Andrea
(86) Internationale Anmeldenummer: PCT/EP2009/008452
(87) Internationale Veröffentlichungsnummer: WO 2010/066344

(56) Entgegenhaltungen:
- CN-A- 101 073 743
- GB-A- 2 383 034
- JP-A- 52 114 565

## Beschreibung

Die Erfindung betrifft ein Verfahren zur Entfernung von Ammoniak-Stickstoff, Ammonium-Stickstoff und Harnstoff-Stickstoff durch Oxidation mit hypochlorit-haltigen Lösungen aus Abluft, die in Anlagen zur Ammoniak- und Hamstoffproduktion entsteht. Dabei soll die Umsetzung von Ammoniak-Stickstoff, Ammonium-Stickstoff und Harnstoff-Stickstoff unter sauren oder neutralen Reaktionsbedingungen durchgeführt werden. Zusätzlich soll eine Vorrichtung zur Durchführung des erfindungsgemäßen Verfahrens Gegenstand der Erfindung sein.

Bei der Herstellung von Ammonium-haltigen Düngemitteln bzw. bei der Herstellung von Düngemittel, die Ammoniak abspalten können, wie beispielsweise Harnstoff-enthaltende Düngemittel, fallen in verschiedenen Verfahrensstufen Ammoniak-, Ammonium- bzw. Harnstoff-haltige Abluftströme an, die hinsichtlich der Umweltbelastung, die derartige Stickstoffverbindungen mit sich bringen, vor Abgabe an die Umwelt aufgereinigt werden müssen.

Die Entfernung von Ammoniak aus Abluft wird in den in der Patentliteratur bekannten Verfahren mittels Zugabe von Schwefelsäure oder Salpetersäure erreicht. Der Ammoniak wird über chemische Absorption vom Abluftstrom entfernt und in das korrespondierende Ammoniumsalz umgesetzt. Der Einsatz von Salpetersäure führt zur Bildung von Ammoniumnitrat und der Einsatz von Schwefelsäure bewirkt die Bildung von Ammoniumsulfat.

Diese Ammoniumsalz-haltigen Lösungen bilden nun Abwasserströme, die nicht ohne weiteres in die Umwelt abgegeben werden können. Dies würde zu erheblichen Umweltbelastungen führen, die sich durch Eutrophisierung in beträchtlichem Maße auf Flora und Fauna auswirken würden. Beim Einsatz von Salpetersäure besteht die Gefahr, dass sich aus Harnstoff-Restspuren Harnstoff-Nitrat bildet, welches instabil ist und zur Zersetzung neigt. Eine Option wäre eine aufwendige Weiterverarbeitung der in den Abwasserströmen enthaltenen Ammoniumsalze zu Ammoniumsulfatdüngemittel oder zu Stickstoff-Phosphor-Kalium-Düngemittel (NPK-Dünger). Diese separate Weiterverarbeitung der entstandenen Ammoniumsalze ist sehr investitions- und energieaufwändig, weswegen nach Alternativen gesucht wird.

Ein Ansatz einen entstehenden Ammoniumsalzstrom in einem Harnstoffherstellungsprozess zu recyceln ist in der EP 0099176 A1 beschrieben. Der Nachteil dieser Methode ist allerdings, dass Kontaminationen von Ammoniumsalzen die Qualität des Endproduktes, in diesem Falle Harnstoff, beeinträchtigen. Beispielsweise wird der so entstehende Harnstoff nicht zur Melaminproduktion eingesetzt werden können.

In der WO 06/061082 A1 wird vorgeschlagen die Ammoniumsalz-haltigen Abwasserströme die bei der Ammoniakentfernung aus Abluft entstehen mittels Elektrodialyse zu behandeln, wodurch die im Verfahren eingesetzte Säure zurück gewonnen wird und ein wässriger Strom gebildet wird, der an Ammoniumhydroxidsalzen angereichert ist. D.h. in diesem Falle wird der Ammoniumsalz-haltige Abwasserstrom einer aufwendigen Aufbereitung unterzogen.

Ein weiteres Beispiel einer aufwendigen Aufarbeitung des entstehenden Ammoniumsalz-haltigen Abwasserstroms bei der Entfernung von Ammonium-Sticksoffverbindungen aus Abluft, ist in der WO 03/099721 offengelegt. Hier wird das entstehende Ammoniumsalz bei erhöhten Temperaturen mit Peroxiden behandelt. Dabei wird das Ammoniumsalz in einer Zersetzereinheit zu NH₃, CO₂ und H₂O zersetzt und kann in der Harnstoffsyntheseeinheit wieder verwendet werden. Dabei könnte allerdings das zugesetzte Peroxid zu unerwünschten Nebeneffekten führen.

Ein Prozess Stickstoffkomponenten-enthaltendes Grundwasser, wie z.B. Ammoniak, Harnstoff und Nitrate, zu behandeln, wird in der US 6,994,793 B2 vorgestellt. Dabei wird das kontaminierte Grundwasser mit chemischen Oxidationsmitteln versetzt, die die Stickstoffkomponenten zu Stickstoffgas oxidieren. Dabei kann als Oxidationsmittel beispielsweise Hypochlorit, Hypobromit, Hypoiodit, Fentonreagenzien, oder Kombinationen dieser Reagenzien eingesetzt werden. Dabei wird das entstehende Stickstoffgas an die Umwelt abgegeben. In weiteren nachfolgenden Prozessstufen kann das Grundwasser von weiteren störenden Komponenten gereinigt werden.

In Lobanov et al, Russ. J. Appl. Chem. 79(10) (2006), 1617-1620 wird ein ähnliches Verfahren wie in der US 6,994,793 B2 beschrieben, um AmmoniumVerbindungen aus Lösungen zu entfernen. Dabei werden Studien zum Umsatz der Ammoniumverbindungen in Abhängigkeit von Reaktionszeit, dem Oxidationsmittel, dem stöchiometrischen Überschuss des Oxidationsmittels und der Temperatur detailliert dargelegt. Ebenso werden in Spalding et al, REMIDIATION Winter 2005, 55-63 Versuche zur Behandlung von Ammonium- und/oder Harnstoff-haltigen Lösungen im Labormaßstab, als auch im halbtechnischen Maßstab beschrieben.

Sämtliche oben aufgeführten Methoden zur Entfernung von Stickstoffkomponenten durch den Einsatz von Oxidationsmitteln berücksichtigen ausschließlich die Aufreinigung von Lösungen, aber nicht von zu reinigender Abluft. Ein Beispiel zur Abluftreinigung von Sanitäranlagen mittels Hypochlorit-haltiger Lösung ist in der GB 2047217 A1 beschrieben. Hier wird ein aufzureinigendes Gas, welches die odorierenden Substanzen Schwefelwasserstoff und Ammoniak enthält, im Gegenstrom zu einer Natriumhypochloritlösung über eine Säule geschickt, die mit einem Katalysatormaterial aus Nickelperoxid bestückt ist. Dabei hat die Hypochlorit-Lösung einen pH-Wert zwischen 7,5 und 11,0. Dieser basische pH-Wert ist notwendig, um die Austragung von Ni(II)-Verbindungen vom Katalysatormaterial zu vermeiden, die im sauren Milieu stattfinden würde.

Die EP 0669850 B1 beansprucht ein ähnliches Verfahren, bei dem ebenfalls ein Katalysator vorgesehen ist und bei dem Hypochlorit als Oxidationsmittel im basischen pH-Bereich eingesetzt wird. In dieser Schrift ist die Entfernung von einer oder mehreren organischen Substanzen und/oder Geruchstoffen aus Gasströmen beansprucht. Zudem wird zusätzlich Recycle-Lauge mit der frischen Oxidationsmittel-Lösung vermischt und das Katalysatorbett ist so angeordnet, dass es selbst dann mit Lauge gefüllt ist, wenn der Laugenstrom unterbrochen ist.

Die JP 56031424 AA beschreibt ein Verfahren, bei der in einer ersten Stufe das zu reinigende Gas einer stark alkalischen Wäsche bei einem pH-Wert von 10 - 13 unterzogen wird, bevor es dann in einer zweiten Stufe einer Hypochlorit-Wäsche unterzogen wird, wobei ein pH-Wert von 6 - 8 eingestellt wird. Dabei würden im zu reinigenden Gas enthaltene Ammoniumverbindungen in der ersten Waschstufe in freies Ammoniak umgewandelt werden, welches dann in der zweiten Stufe oxidiert würde. Ausserdem zielt die Erfindung auf die Entfernung von übelriechenden Gasen ab und die Entfernung von Harnstoffverbindungen wird nicht gelehrt.

Dies ist auch bei der JP 52114565 A der Fall. Hier wird ein Verfahren zur Entfernung von Ammoniak und Schwefelwasserstoff aus Abluft durch Oxidation mit sauren und basischen Lösungen von Natriumhypochlorit in einem zweistufigen Waschvorgang gelehrt. Auch hier wird also die Entfernung von Ammoniak-Stickstoff und/oder Ammonium-Stickstoff und/oder Harnstoff-Stickstoff aus Abgasen in Anlagen zur Ammoniak- oder Hamstoffproduktion mit hypochlorithaltigen Lösungen nicht offenbart.

In der JP 5505743 AA wird eine Anlage zur Desodorierung eines Abgases beschrieben. Dabei wird eine Waschlösung eingesetzt, die durch eine pH-Kontrolleinheit auf einen pH-Wert von 6 - 8 eingestellt wird. Die Desodorierung findet dann durch Umwandlung von Ammoniak in Stickstoff und Wasser und Schwefelwasserstoff durch Umwandlung in Schwefelsäure statt. Auch hier wird die Entfernung von Harnstoff und Ammoniumverbindungen, die von dem Begriff der übelriechenden Substanzen nicht umfasst sind, nicht gelehrt. Bei alkalischen Reaktionsbedingungen ist, wie der Fachmann weiss, im Falle von Harnstoff mit der Bildung von halogenierten Kohlenwasserstoffen zu rechnen, so dass mit dem beschriebenen Verfahren eine Harnstoffentfernung auch nicht beabsichtigt gewesen sein kann.

In der GB 1496143 A wird ein Verfahren beansprucht, bei dem in einer ersten Stufe das zu behandelnde Abgas durch eine alkalische Wäsche geleitet wird und dann in einer zweiten Stufe übelriechende Komponenten durch Oxidationsmittel abgetrennt werden. Dabei wird Schwefelwasserstoff als die Komponente beschrieben, die entfernt werden soll. Aber auch die Entfernung von Ammoniak, Schwefeldioxid und Kohlenmonoxid soll auf diese Weise sicher gestellt werden. Die Entfernung von Ammoniumverbindungen und Harnstoffverbindungen wird nicht offenbart. Als oxidierendes Medium wird eine wässrige Chlorlösung oder eine Hypochlorit-Lösung eingesetzt. Nachteilig an diesem Verfahren ist jedoch, dass das als Intermediat gebildete Ammoniumsulfat in Ammoniumchlorid umgewandelt wird und ein oxidativer Abbau des Ammonium-N, beispielsweise zu elementarem Stickstoff nicht stattfindet. Somit fällt ein Ammonium-N enthaltender Abwasserstrom an, der separat aufgearbeitet werden muss.

Aufgabe der Erfindung ist es einen Prozess zur Verfügung zu stellen, der es erlaubt Abluftströme, die übelriechendes Ammoniak, aber auch Ammoniumverbindungen und/oder Harnstoffverbindungen, die keine Geruchsbelastung darstellen, enthalten, derart aufzubereiten, dass die resultierenden aufgereinigten Abgase an diesen Stickstoffverbindungen abgereichert sind. Dabei soll der Prozess in bestehende Ammoniak- bzw. Harnstoffanlagen integrierbar sein und das oben geschilderte Problem zusätzlicher zu behandelnder Abwasserströme soll nicht mehr vorhanden sein. Dabei soll der Prozess so ausgelegt sein, dass die durch Oxidation entstehenden Salze in schon vorhandenen Anlagenteilen abgetrennt werden können.

Dies wird erreicht durch den Einsatz eines Verfahrens zur Auswaschung von Ammoniak-Stickstoff und/oder Ammonium-Stickstoff und/oder Harnstoff-Stickstoff aus mit diesen Stickstoffverbindungen angereicherten Abgasen in Anlagen zur Ammoniak- oder Harnstoffproduktion, wobei die Stickstoffverbindungen mit einer hypochlorithaltigen Lösung in einem Wäscher zunächst ein Intermediat bilden, das unter sauren oder neutralen Reaktionsbedingungen zu elementarem Stickstoff und Salz umgesetzt wird und die Umsetzung der Stickstoffverbindungen zu elementarem Stickstoff und Salz in einem pH-Wert-Bereich von 4 bis 6 abläuft..

Grundlage für die Erfindung sind folgende Reaktionen:

(1) 2 NH₄OH + 3 NaclO → N₂ + 3 NaCl + 5 H₂O

oder

(2) 2 NH₄⁺ + 3 NaClO → N₂ + 3 NaCl + 3 H₂O + 2 H⁺

und

(3) 4 NH₄OH + 3 Ca(ClO)₂ → 2 N₂ + 3 CaCl₂ + 10 H₂O

sowie

(4) H₂N-CO-NH₂ + 3 NaClO → N₂ + CO₂ + 3 NaCl + 2 H₂O

Die Schreibweise NH₄OH in den Gleichungen (1) und (3) soll dabei andeuten, dass die Reaktionen im sauren bzw. leicht sauren Milieu abläuft. Bei alkalischen Reaktionsbedingungen ist im Falle von Harnstoff mit der Bildung von halogenierten Kohlenwasserstoffen, insbesondere von Trichlormethan, zu rechnen. Die Bildung von Protonen (s. Gleichung (2)), oder der Freisetzung von Wasser aus Ammoniumhydroxid zeigen an, dass im Verlauf der Reaktion das Reaktionsgemisch durch Zusatz von Lauge in seinem pH-Wert zum Neutralpunkt hin, angepasst werden muss.

Legt man diese Reaktionsgleichungen zugrunde, so ist beispielhaft bei einem stöchiometrischen Verbrauch, ohne Überschuß, für die Entfernung von 1 t Ammonium ein Bedarf von 4,41 t NaOCl (100 %) anzusetzen.

Deshalb ist es zweckmäßig, dass die Umsetzung der Stickstoffverbindungen zu elementarem Stickstoff und Salz in einem pH-Wert-Bereich von 4 bis 6 abläuft und besonders bevorzugt in einem Bereich von 4,5 bis 5,5 abläuft. Bei noch niedrigeren pH-Werten würde es, wie oben angedeutet, zu einer Freisetzung von Chlor kommen. Dies muß aufgrund der Umweltschädlichkeit von Chlor, die bedingt durch die hohe Reaktionsfreudigkeit dieses chemischen Elements auftritt, unbedingt vermieden werden. Das Einstellen eines bestimmten pH-Wertes im beanspruchten pH-Wert-Bereich von 4 - 6 kann dadurch erreicht werden, dass der pH-Wert im Abwassers des Wäschers gemessen wird, und der pH-Wert in diesem Wäscher über einen Zulaufstrom reguliert wird, durch den Lauge direkt in den Wäscher eingespeist wird oder durch den Lauge durch Beimischung zur hypochhlorit-haltigen Lösung in den Wäscher eingebracht wird.

Bei der hier beschriebenen Umsetzung der Stickstoffverbindungen zu elementarem Stickstoff und Salz soll eine hypochlorit-haltige Lösung zum Einsatz kommen, bei der es sich um Natriumhypochlorit oder Calciumhypochlorit handelt.

In einer vorteilhaften Ausgestaltung des Verfahrens wird dem Waschwasserstrom eines Wäschers die hypochlorit-haltige Lösung beigemischt und die Umsetzung der im Abgas enthaltenen Stickstoffverbindungen findet direkt in dem Wäscher statt. Ein bei diesem Prozess entstehendes Abwasser aus dem Wäscher wird in einen Ionentauscher geleitet, in dem die generierten Salze abgetrennt werden und ein gereinigter Abgasstrom aus dem Wäscher an die Umgebung abgegeben wird.

Eine weitere Möglichkeit der Ausgestaltung der Erfindung ist es, die Umsetzung der Stickstoffverbindungen im Abgas in einem weiteren dem ersten Wäscher gasseitig nachgeschalteten separaten Wäscher durchzuführen, in den die hypochlorit-haltige Lösung aus einem Sammelbehälter direkt eingebracht wird. Ein mit diesem Prozess entstehendes Abwasser wird aus dem Wäscher in einen Ionentauscher geleitet, in dem die generierten Salze abgetrennt werden und ein gereinigter Abgasstrom aus dem Wäscher an die Umgebung abgegeben wird.

In weiterer Ausgestaltung der Erfindung wird das Verfahren im Kreislauf betrieben und das entstehende Salz und der elementare Stickstoff werden in den Sammelbehälter der hypochlorit-haltigen Lösung zurückgeführt und ein gereinigter Abgasstrom wird an die Umgebung abgegeben. Zudem wird im Sammelbehälter der hypochlorit-haltigen Lösung die Salzkonzentration gemessen, die in diesem Sammelbehälter über einen Ablaufstrom reguliert wird, durch den Flüssigkeit aus dem Sammelbehälter abtransportiert wird und über einen Zulaufstrom, hypochlorit-haltige Lösung nachgespeist wird.

Mit Vorteil wird das entstehende Abwasser aus dem Wäscher, in dem die Umsetzung der Stickstoffverbindungen zu elementarem Stickstoff und Salz stattfindet, oder der Ablaufstrom aus dem Sammelbehälter mit einem Reduktionsmittel versetzt, das aus einer Gruppe ausgewählt wird, die Sulfit und Hydrogensulfit enthält. Dieser Verfahrensschritt ist notwendig, um überschüssiges Hypochlorit, das im Abwasserstrom vorhanden ist zu Chlorid abzubauen. Beispielhaft wird dafür Natriumsulfit eingesetzt.

Nachfolgend wird die Erfindung anhand eines Ausführungsbeispiels dargelegt. Dabei wird die Entfernung von Ammoniak-Stickstoff, Ammonium-Stickstoff und Harnstoff-Stickstoff durch Oxidation mit hypochlorit-haltigen Lösungen aus Abluft, die aus einer Harnstoffgranulierungseinheit stammt, beschrieben. Dabei entsteht am Granulator bei einem Durchsatz von 450 t Abluft / h ein Abgas, das 0,08 kg Ammoniak / t Abluft und 0,34 Gew.-% Harnstoff enthält. Dieser Abgasstrom wird nun einem Wäscher zugeführt und dort mit Prozesskondensat beaufschlagt. Das diese Wäsche verlassende Abgas setzt sich dann aus 0,08kg Ammoniak / t Abluft und 0,002 g Harnstoff / t Abluft zusammen, das nach herkömmlichem Stand der Technik an die Umgebung abgegeben wird. Damit werden pro Stunde ca. 36 kg Ammoniak emittiert. Die Erfindung besteht nun darin, dem Prozesskondensat, das hier als Waschwasser im Wäscher eingesetzt wird, eine ausreichende Menge an Hypochlorit zuzusetzen und damit Ammoniak-Stickstoff, Ammonium-Stickstoff und Harnstoff-Stickstoff durch Oxidation aus dem Abgas abzufangen und in elementaren Stickstoff und Salz umzusetzen. Dazu ist in diesem Beispiel bei stöchiometrischem Ansatz von einem Hypochlorit-Verbrauch von ca. 145 kg / h auszugehen. Eine erhöhte Temperatur im Wäscher fördert dabei die chemische Reaktion des Hypochlorits mit den jeweiligen Stickstoffverbindungen.

Es werden nachfolgend anhand zweier Figuren zwei Ausführungsvarianten des dargelegten Ausführungsbeispiels der Erfindung näher erläutert. Dabei zeigen:
- Fig 1:: Eine erfindungsgemäße Verfahrensskizze des Prozesses, bei dem die hypochlorit-haltige Lösung zur Behandlung des Abgasstroms direkt dem Waschwasserstrom eines Wäschers beigemischt wird.
- Fig. 2:: Eine Ausführungsform der Erfindung, bei der die hypochlorit-haltige Lösung zur Behandlung des Abgasstroms über einen zusätzlichen separaten Wäscher in das Verfahren eingebracht wird.

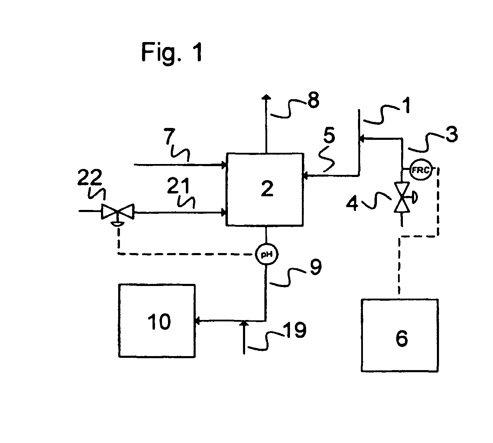

In Fig. 1 wird dem Waschwasserstrom (1) der zum Wäscher (2) geleitet wird die entsprechende Menge hypochlorit-haltige Lösung (3) direkt, über einen mit einem Ventil (4) steuerbaren Zulauf als Gemisch (5) zugegeben. Die hypochlorit-haltige Lösung wird dabei aus einem Sammelbehälter (6) entnommen. Dadurch erfolgt die Oxidation eines Großteils des im Abgasstrom (7) enthaltenen Ammoniums in elementaren Stickstoff. Der Abgasstrom kommt in diesem Beispiel aus einer Harnstoffgranulation. Generell können aber sämtliche in einer Anlage zur Ammoniak- oder Harnstoffproduktion anfailenden Abgasströme mit dem erfindungsgemäßen Verfahren aufgereinigt werden. Das aufgereinigte Abgas (8) verlässt den Wäscher (2) und wird anschließend an die Umgebung abgegeben. Das Abwasser (9) aus dem Wäscher wird in einen Ionentauscher (10) geleitet, indem die generierten Salze abgetrennt werden. Dabei kann, wie beispielhaft gezeigt, in das Abwasser (9) ein Reduktionsmittel (19) eingespeist werden, um überschüssiges Hypochlorit, das im Abwasser (9) vorhanden ist, zu Chlorid abzubauen. Um zu gewährleisten, dass der pH-Wert in dem Wäscher (2) in einem Bereich von 4 -6 gehalten wird, wird der pH-Wert des Abwassers (9) gemessen, wobei die Zugabe von Lauge (21) zum Wäscher (2) über das Ventil (22) geregelt wird.

Mit dieser Art und Weise der Durchführung ist eine einfache Zufuhr hypochlorit-haltiger Lösung garantiert und zudem kann die Stickstoff-Oxidation mit Hypochlorit in einem im herkömmlichen Verfahren schon integrierten Apparat durchgeführt werden. Nachteilig bei dieser Verfahrensvariante ist die Gefahr, dass hypochlorit-haltige Lösung über den Wäscher auch in andere Anlagenteile eindringt.

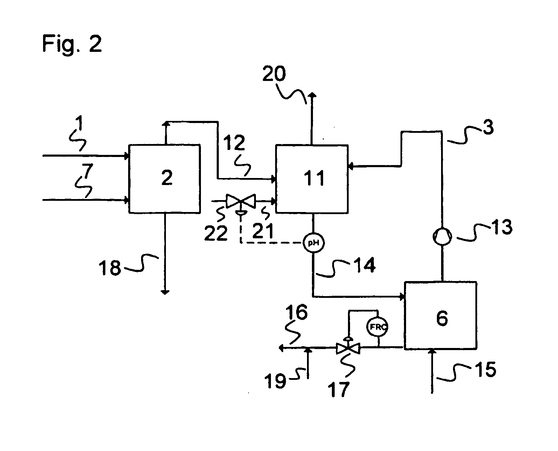

In einer zweiten Verfahrensvariante, die in Fig. 2 dargestellt ist, wird dem in herkömmlichen Anlagen vorhandenen Wäscher (2), der zur Reinigung des im Abgasstrom (7) enthaltenen Harnstoff-Stickstoffs eingesetzt wird, ein zweiter Wäscher (11) nachgeschaltet, der mit dem Abgasstrom (12) aus dem ersten Wäscher (2) beaufschlagt wird. Dieser Wäscher wird mit reinem Wasser beaufschlagt. Eine basische Wäsche, wie aus dem Stand der Technik bekannt, ist nicht erforderlich. Die Auswaschung von Ammonium aus dem Abgas erfolgt also hier in einem separaten Waschkreislauf. Dabei wird der erste Wäscher (2) nach dem Stand der Technik betrieben, indem ein Abgasstrom (7) und eine Waschwasserstrom (1) zugeführt werden. Das Abwasser (18) aus dem Wäscher (2) wird in einen Sammelbehälter geführt, um wiederverwendet zu werden (nicht gezeigt). Der Abgasstrom (12) aus dem Wäscher (2), der nun bedingt durch die Reinigung im Wäscher (2) weitestgehend frei von Harnstoff ist, wird in den zweiten nachgeschalteten Wäscher (11) geleitet.

In den zweiten Wäscher (11) wird hypochlorit-haltige Lösung (3) über eine Pumpe (13) aus einem Sammelbehälter (6) zugeführt. Dadurch werden die im Abgas noch enthaltenen Stickstoffverbindungen zu elementarem Stickstoff und Salz umgesetzt. Der aufgereinigte Abgasstrom (20) kann dann an die Umgebung abgegeben werden. Das im Wäscher (11) entstehende Abwasser (14), das die entstandenen Salze und elementaren Stickstoff enthält, wird in diesem Ausführungsbeispiel wieder in den Sammelbehälter (6) für die hypochlorit-haltige Lösung geleitet. Der pH-Wert im Wäscher (11) wird über eine pH-Wert-Messung im Abwasser (14) kontrolliert und die Zugabe der Lauge (21) wird über das Ventil (22) reguliert. Der Sammelbehälter (6) besitzt eine Messeinheit zur Erfassung der Salzkonzentration, die über den Ablaufstrom (16) in Verbindung mit dem Ventil (17) reguliert werden kann. Dabei wird dem Ablaufstrom (16) beispielhaft Natriumsulfit als Reduktionsmittel (19) zugesetzt. Zudem wird der Sammelbehälter mit einem Zulaufstrom (15) mit frischer hypochlorit-haltiger Lösung versorgt.

Diese Verfahrensvariante ist vorteilhaft mit dem Effekt verbunden, dass der Abgasstrom aus dem ersten Wäscher kein Harnstoff mehr enthält und nur noch die Entfernung von Ammonium erforderlich ist, wodurch der Verbrauch hypochlorit-haltiger Lösung deutlich verringert werden kann. Ausserdem erfolgt durch die Einführung des zweiten Wäschers mit unabhängigem Waschkreislauf keine Rückkopplung auf andere, vorgeschaltete Systeme, so dass eine Kontamination mit hypochlorit-haltiger Lösung der anderen Anlagenteile weitestgehend ausgeschlossen werden kann. Nachteilig bei dieser Verfahrenvariante sind, die durch den zusätzlichen Wäscher bedingten erhöhten Investitionskosten und den in dem zusätzlichen Wäscher verursachten Druckverlust, der über ein nachfolgendes Abluftgebläse wieder ausgeglichen werden muss. Trotz der genannten Nachteile dieser Variante überwiegen hier die aufgezeigten Vorteile.

Beide Verfahrensvarianten erlauben die Zugabe der Lauge auch dadurch, dass sie beispielsweise vor der Einleitung in den Wäscher der hypochlorit-haltigen Lösung beigemischt wird.

Vorteile, die sich aus der Erfindung ergeben:
- in bestehende Ammoniak- und Harnstoffanlagen leicht zu integriende Elemente
- herkömmliche Behandlung der Abluftströme mittels Säuren ist nicht mehr notwendig.
- der Einsatz von teuren Katalysatoren wird vermieden, was zu einer Kosteneinsparung führt.
- aufwendige Abwasserbehandlung bzw. -entsorgung entfällt, da direkt der kontamierte Abluftstrom behandelt wird, was mit einer Kostenersparnis verbunden ist.
- eine effizientere Auswaschung von Ammoniak, Harnstoff und Ammoniumverbindungen aus Abgas wird durch die leicht sauren Reaktionsbedingungen erreicht, da es bei diesen Reaktionsbedingungen zu einer Überführung der im Abgas enthaltenen Komponenten in wasserlösliches Ammonium kommt.

**Bezugszeichenliste**

| | |
|---|---|
| 1 | Waschwasserstrom |
| 2 | Wäscher |
| 3 | hypochlorit-haltige Lösung |
| 4 | Ventil |
| 5 | Gemisch |
| 6 | Sammelbehälter |
| 7 | Abgasstrom |
| 8 | aufgereinigtes Abgas |
| 9 | Abwasser |
| 10 | Ionentauscher |
| 11 | zweiter Wäscher |
| 12 | Abgasstrom |
| 13 | Pumpe |
| 14 | Abwasser |
| 15 | Zulaufstrom |
| 16 | Ablaufstrom |
| 17 | Ventil |
| 18 | Abwasser |
| 19 | Reduktionsmittel |
| 20 | Abgasstrom |
| 21 | Lauge |
| 22 | Ventil |

## Patentansprüche

1. Verfahren zur Auswaschung von Ammoniak-Stickstoff und/oder Ammonium Stickstoff und/oder Harnstoff-Stickstoff aus mit diesen Stickstoffverbindungen angereicherten Abgasen in Anlagen zur Ammoniakoder Harnstoffproduktion, **dadurch gekennzeichnet, dass** die Stickstoffverbindungen mit einer hypochlorit-haltigen Lösung in einem Wäscher zunächst ein Intermediat bilden, das unter sauren oder neutralen Reaktionsbedingungen zu elementarem Stickstoff und Salz umgesetzt wird und die Umsetzung der Stickstoffverbindungen zu elementarem Stickstoff und Salz in einem pH-Wert-Bereich von 4 bis 6 abläuft.

2. Verfahren nach Anspruch 1 , **dadurch gekennzeichnet, dass** die Umsetzung der Stickstoffverbindungen zu elementarem Stickstoff und Salz in einem pH- Wert-Bereich von 4,5 bis 5,5 abläuft.

3. Verfahren nach Anspruch 2, **dadurch gekennzeichnet, dass** der pH-Wert im Abwasser des Wäschers gemessen wird, und der pH-Wert in diesem Wäscher über einen Zulaufstrom reguliert wird, durch den Lauge direkt in den Wäscher eingespeist wird oder durch den Lauge durch Beimischung zur hypochlorithaltigen Lösung in den Wäscher eingebracht wird.

4. Verfahren nach einem der Ansprüche 1 bis 3, **dadurch gekennzeichnet, dass** es sich bei der hypochlorit-haltigen Lösung um Natriumhypochlorit oder CaI- ciumhypochlorit handelt.

5. Verfahren nach einem der Ansprüche 1 bis 4, **dadurch gekennzeichnet, dass** dem Waschwasserstrom eines Wäschers die hypochlorit-haltige Lösung beigemischt wird und die Umsetzung der im Abgas enthaltenen Stickstoffverbindungen in dem Wäscher stattfindet.

6. Verfahren nach Anspruch 5, **dadurch gekennzeichnet, dass** ein bei diesem Prozess entstehendes Abwasser aus dem Wäscher in einen Ionentauscher geleitet wird, in dem die generierten Salze abgetrennt werden und ein gereinigter Abgasstrom aus dem Wäscher an die Umgebung abgegeben wird.

7. Verfahren nach einem der Ansprüche 1 bis 4, **dadurch gekennzeichnet, dass** die Umsetzung der Stickstoffverbindungen im Abgas in einem weiteren dem ersten Wäscher gasseitig nachgeschalteten separaten Wäscher stattfindet, in den die hypochlorit-haltige Lösung aus einem Sammelbehälter direkt eingebracht wird.

8. Verfahren nach Anspruch 7, **dadurch gekennzeichnet, dass** ein mit diesem Prozess entstehendes Abwasser aus dem Wäscher in einen Ionentauscher geleitet wird, in dem die generierten Salze abgetrennt werden und ein gereinigter Abgasstrom aus dem Wäscher an die Umgebung abgegeben wird.

9. Verfahren nach Anspruch 7, **dadurch gekennzeichnet, dass** das Verfahren im Kreislauf betrieben wird, und das entstehende Salz und der elementare Stickstoff in den Sammelbehälter der hypochlorit-haltigen Lösung zurückgeführt werden und ein gereinigter Abgasstrom an die Umgebung abgegeben wird.

10. Verfahren nach Anspruch 9, **dadurch gekennzeichnet, dass** im Sammelbehälter der hypochlorit-haltigen Lösung die Salzkonzentration gemessen wird, und die Salzkonzentration in diesem Sammelbehälter über einen Ablaufstrom reguliert wird, durch den Flüssigkeit aus dem Sammelbehälter abtransportiert wird und über einen Zulaufstrom, hypochlorit-haltige Lösung nachgespeist wird.

11. Verfahren nach einem der Ansprüche 1 bis 10, **dadurch gekennzeichnet, dass** das entstehende Abwasser aus dem Wäscher, in dem die Umsetzung der Stickstoffverbindungen zu elementarem Stickstoff und Salz stattfindet, oder der Ablaufstrom aus dem Sammelbehälter mit einem Reduktionsmittel versetzt wird, das aus einer Gruppe ausgewählt wird, die Sulfit und Hydrogensulfit enthält.

## Claims

1. A process for scrubbing ammonia nitrogen and/or ammonium nitrogen and/or urea nitrogen from waste gases in which these nitrogen compounds have accumulated, in plants for producing ammonia or urea, comprising first forming an intermediate of the nitrogen compounds with a hypochlorite-containing solution in a scrubber and reacting said intermediate under acidic or neutral conditions to form elemental nitrogen and salt, the reaction of the nitrogen compounds to form elemental nitrogen and salt taking place in a pH range from 4 to 6.

2. The process according to claim 1, wherein the reaction of the nitrogen compounds to form elemental nitrogen and salt takes place in a pH range from 4.5 to 5.5.

3. The process according to claim 2, wherein the pH is measured in the wastewater of the scrubber, and the pH in said scrubber is regulated via a feed stream through which lye is fed directly into the scrubber or through which lye is introduced into the scrubber by admixture to the hypochlorite-containing solution.

4. The process according to any of the claims 1 to 3, wherein the hypochlorite-containing solution comprises sodium hypochlorite or calcium hypochlorite.

5. The process according to any of the claims 1 to 4, wherein to the scrub water stream of a scrubber is admixed the hypochlorite-containing solution, and the reaction of the nitrogen compounds present in the waste gas takes place in the scrubber.

6. The process according to claim 5, wherein a wastewater produced in the scrubber is passed into an ion exchanger, in which salts generated are removed and a cleaned waste gas stream is discharged from the scrubber to the environment.

7. The process according to any of the claims 1 to 4, wherein the reaction of the nitrogen compounds in the waste gas takes place in a further separate scrubber, downstream at the gas side of the first scrubber, into said further scrubber is introduced the hypochlorite-containing solution directly from a collecting container.

8. The process according to claim 7, wherein the wastewater generated from the further scrubber is passed from the scrubber into an ion exchanger, in which the salts generated are removed and a cleaned waste gas stream is discharged from the scrubber to the environment.

9. The process according to claim 7, wherein the process is operated in circulation, and the salt generated and elemental nitrogen are recycled to the collecting container of the hypochlorite-containing solution, and a cleaned waste gas stream is discharged to the environment.

10. The process according to claim 9, wherein the salt concentration is measured in the collecting container of the hypochlorite-containing solution, and the salt concentration is regulated in said collecting container via an outgoing stream by which liquid is transported out of the collecting container and the hypochlorite-containing solution is fed in via a feed stream.

11. The process according to any of the claims 1 to 10, wherein wastewater generated from a scrubber in which the reaction of the nitrogen compounds to form elemental nitrogen and salt takes place, or the outgoing stream from said collecting container is admixed with a reducing agent selected from a group consisting of sulfite and hydrogen sulfite.

## Revendications

1. Procédé destiné à l'éluviation d'azote ammoniacal et/ou d'azote d'ammonium et/ou d'azote d'urée à partir de fumées enrichies par ces combinaisons d'azote dans des installations destinées à la production d'ammoniac ou d'urée, **caractérisé en ce que** les combinaisons d'azote constituent d'abord dans un laveur avec une solution à base d'hypochlorite un intermédiaire qui est transformé en azote élémentaire et en sel dans des conditions de réaction acides ou neutres et **en ce que** la transformation des combinaisons d'azote en azote élémentaire et en sel se déroule dans une zone de valeur pH de 4 à 6.

2. Procédé selon la revendication 1, **caractérisé en ce que** la transformation des combinaisons d'azote en azote élémentaire et en sel se déroule dans une zone de valeur pH de 4,5 à 5,5.

3. Procédé selon la revendication 2, **caractérisé en ce que** la valeur pH est mesurée dans l'eau usée du laveur, et **en ce que** la valeur pH dans ce laveur est régulée par l'intermédiaire d'un flux d'amenée, est introduite directement dans le laveur à travers le bain ou chargée dans le laveur par addition à la solution à base d'hypochlorite à travers le bain.

4. Procédé selon une quelconque des revendications 1 à 3, **caractérisé en ce que** pour la solution à base d'hypochlorite, il s'agit d'hypochlorite de sodium ou d'hypochlorite de calcium.

5. Procédé selon une quelconque des revendications 1 à 4, **caractérisé en ce que** la solution à base d'hypochlorite est additionnée au flux d'eau de lavage d'un laveur et **en ce que** la transformation des combinaisons d'azote contenues dans les fumées a lieu dans le laveur.

6. Procédé selon la revendication 5, **caractérisé en ce qu'**une eau usée s'étant formée lors de ce processus est conduite hors du laveur dans un échangeur ionique, dans lequel les sels générés sont séparés et **en ce qu'**un flux de fumées épuré est relâché hors du laveur dans l'environnement.

7. Procédé selon une quelconque des revendications 1 à 4, **caractérisé en ce que** la transformation
des combinaisons d'azote en fumées a lieu dans un autre laveur séparé branché en aval côté gaz du premier laveur, dans lequel la solution à base d'hydrochlorite est amenée directement à partir d'un bac collecteur.

8. Procédé selon la revendication 7, **caractérisé en ce qu'**une eau usée s'étant formée avec ce processus est conduite hors du laveur dans un échangeur ionique, dans lequel les sels générés sont séparés et **en ce qu'**un flux de fumées épuré est relâché hors du laveur dans l'environnement.

9. Procédé selon la revendication 7, **caractérisé en ce que** le procédé est conduit dans le circuit et le sel se formant et l'azote élémentaire sont réintroduits dans le bac collecteur de la solution à base d'hypochlorite, et **en ce qu'**un flux de fumées épuré est relâché dans l'environnement.

10. Procédé selon la revendication 9, **caractérisé en ce que** la concentration de sel est mesurée dans le bac collecteur de la solution à base d'hypochlorite, et **en ce que** la concentration de sel est régulée dans ce bac collecteur par l'intermédiaire d'un flux de sortie, par lequel du liquide est transporté hors du bac collecteur et **en ce que** par l'intermédiaire d'un flux d'entrée, de la solution à base d'hypochlorite est réalimentée.

11. Procédé selon une quelconque des revendications 1 à 10, **caractérisé en ce que** l'eau usée formée provenant du laveur, dans lequel a lieu la conversion des combinaisons d'azote en azote élémentaire et en sel, ou le flux de sortie provenant du bac collecteur est mélangé avec un agent de sortie, qui est sélectionné à partir d'un groupe, qui contient du sulfite et du sulfite d'hydrogène.
